# EUROPEAN PATENT APPLICATION

(11) **EP 4 001 236 A1**
(43) Date of publication of application: **25.05.2022**
(21) Application number: 20208395.2
(22) Date of filing: 18.11.2020
(51) Int. Cl.: C04B 20/04, C04B 28/04, C04B 28/06

(54) **METHOD FOR MANUFACTURING COMPOSITE BINDER**

(71) Applicant: HeidelbergCement AG, 69120 Heidelberg (DE)
(72) Inventor: PATO, Nicolas, 69239 Neckarsteinach (DE); BEN HAHA, Mohsen, 69117 Heidelberg (DE); BOLTE, Gerd, 69190 Waldorf (DE); MULLER, Arnaud, 69115 Heidelberg (DE)
(74) Representative: Zellentin & Partner mbB Patentanwälte

(57) **Abstract**

Method for manufacturing a composite cement comprising a cement and calcined clay, comprising the steps of providing the cement, providing calcined clay by grinding a material comprising clay compounds and at least one of quartz and/or feldspar, separating the clay compounds from quartz and/or feldspar by classification and calcination of the clay compounds to provide the calcined clay, and mixing the cement with the calcined clay to provide the composite cement, as well as composite cement obtainable thereby and use of a calcined clay, obtainable by grinding a material comprising clay compounds and at least one of quartz and/or feldspar, separating the clay compounds from quartz and/or feldspar by classification and calcination of the clay compounds to provide the calcined clay, to manufacture a composite cement by mixing the calcined clay with a cement.

## Description

The present invention relates to a method for manufacturing a composite cement comprising a cement and calcined clay obtainable by grinding material comprising clay compounds and at least one of quartz and feldspar, separating the clay compounds from quartz and/or feldspar by classification and calcination of the clay compounds, the composite cement obtained and the use of a calcined clay to manufacture a composite cement.

The use of calcined clay as supplementary cementitious material (SCM) to substitute clinker has gained increased interest in the production of cement because it has the potential of cutting down the CO₂ footprint of cement and concrete. The selection of suitable clays for calcination is mainly based on its content of kaolinite, the most reactive phase after the thermal treatment. However, very often kaolinite is present in clays in low percentages, coupled with a high content of quartz, feldspar and mica. The quartz, feldspar and mica are inert after calcination, therefore the energy spent on heating them during calcination of the clay compounds is basically wasted, and moreover the abrasiveness of quartz and feldspar additionally entails high wear in process equipment like crushers. More pronounced is the wear generated by quartz and feldspar in flash calciners, a technology that is considered as State-of-the-Art for clay calcination due to the lower power consumption and ability to control the color of the final product.

There have already been proposals for separation of clay compounds, specifically kaolinite, from quartz and mica. From FR 2 374 089 A it is known to separate kaolinite from quartz sand and mica by flotation and then sand from mica by grinding and flotation. Also GB 426,423 and US 2010/0040528 A1 rely on flotation for separation of different minerals from one another, any grinding is only performed to have fine enough material for flotation. CN 106000622 A grinds an ore mineral and then "washes away" the clay and impurity components covering the surface of the ore mineral. The ore lumps are then sorted by colour, each colour ground separately and the ground ore separated in a "desilting hopper". The overflow of that is concentrated and dewatered and used as "building cement raw material". CN 110201791 A describes a method for making kaolin tailings (residue from kaolin production) useful. The kaolin tailings are ground and separated in a "scrubbing machine" which seems to be a wet process, analogous to the floating methods described in GB 426,423, US 2010/0040528 A1 and FR 2 374 089 A. According to CN 110201791 A the scrubbing provides quartz as grit and kaolin plus mica as overflow. The overflow "enters the high-mesh screening" which provides mica as coarse and kaolin as fine fraction. The document mentions a use as "building materials or cement raw materials". CN 108793731 A describes grinding kaolin tailings to separate them into kaolin and quartz, but only the quartz is used to make a raw material for ultra-clear glass. All these approaches need a lot of energy for separation when the kaolin shall be used as supplementary cementitious material in the form of calcined clay.

Thus, there is still a need to find more effective methods to provide useful SCM for composite cements, especially providing reactive SCM while reducing effort and energy demand of the method.

The present invention solves the described problems by a method for manufacturing a composite cement comprising a cement and calcined clay comprising the steps:
- providing a clay raw material containing clay compounds and at least one of quartz and feldspar;
- grinding the clay raw material;
- classification of the ground clay raw material to provide a fine fraction comprising most of the clay compounds and a coarse fraction comprising most of the quartz and/or feldspar;
- calcining the fine fraction containing the clay compounds to provide calcined clay;
- providing the cement; and
- mixing the cement and the calcined clay to provide the composite cement.
The invention further solves the problem by a composite cement obtained accordingly and by using a calcined clay obtainable by providing a clay raw material containing clay compounds and at least one of quartz and feldspar, grinding the clay raw material, classification of the ground clay raw material into a fine fraction containing most of the clay compounds and a coarse fraction containing most of the quartz and/or feldspar and calcining the fine fraction containing the clay compounds to provide calcined clay, as supplementary cementitious material by mixing the calcined clay with a cement.

### Advantages:

- The new calcined material, optionally in combination with quartz, highly reduces the water demand of the final product
- Blending the pure calcined clays with the non-reactive quartz can reduce the CO₂ footprint with keeping the same performance of the original material composition
- A high performance cement from a mix of reactive metakaolin and calcined clays, ordinary Portland cement (OPC) and quartz and additionally limestone is obtained, wherein a good early strength results from OPC hydration and a further increase of strength is expected from the reaction of the calcined clays and other additions-
- A better particle packing is achieved
- Besides a chemical interaction, limestone powder and quartz can act as fillers and lower the water demand

Advantages of separation before calcination:
- the amount of reactive component is increased
- content of unwanted phases is reduced

So as to simplify the description the following abbreviations that are usual in the field of cement are used herein: H - H₂O, C - CaO, A - Al₂O₃, F - Fe₂O₃, M - MgO, S - SiO₂ and $ - SO₃. Compounds are mostly named by the pure form, without explicit mentioning of solid solutions, foreign ion substitution and impurities etc. as are usual in technical and industrial materials. As the man skilled in the art knows, the exact composition of the phases described may vary due to substitution with foreign ions. Such compounds are comprised when mentioning the pure form herein unless it is expressly stated otherwise.

The term "reactive" shall mean a hydraulic reactivity unless specified otherwise. Hydraulic reactivity designates the reaction of a compound with water or other water containing compounds to form hydrated phases including a reaction of two or more compounds occurring simultaneously.

Herein, clinker designates a sinter product obtained by burning a raw material at elevated temperature and containing at least one hydraulic phase. Burning means a change of one or more property of the starting material such as chemistry, crystallinity, phase composition, spatial arrangement and bonds of lattice atoms which is brought about by a supply of thermal energy. The starting material may be a single material, but usually it is a mixture. The starting material is typically finely ground and then designated as raw meal. The starting material may contain mineralizers, which are substances decreasing the temperature necessary for melting and/or act as fluxes and/or enhance clinker formation e.g. by forming solid solutions or stabilisation of phases. Mineralizers can be part of the starting material components or be added as separate component.

Cement is used to designate a material that, after mixing with a liquid to form a paste, is able to develop mechanical strength by hydraulic reaction. Thus, cement denotes a clinker ground with or without further components, and other mixtures like super sulphated cement, geopolymer cement, and dicalcium silicate cement obtained by hydrothermal treatment. A cement is used adding water or another liquid and mostly also aggregate as well as optionally admixtures and/or additives. Cements containing pozzolanic and/or latent hydraulic material and/or mineral filler in addition to the cement are designated composite cements.

A supplementary cementitious material (SCM) is defined as a pozzolanic and/or latent hydraulic material useful to replace a part of the cement in a composite cement. Latent hydraulic materials have a composition that allows hydraulic reaction upon contact with water, wherein typically an activator is needed to enable hardening within technically feasible times. Activator means a substance that accelerates the hardening of latent hydraulic materials. It can be an addition like sulfate or calcium (hydr)oxide and/or products of the hydraulic reaction of the ground clinker, e.g. calcium silicates liberate calcium hydroxide during hardening. Pozzolanic materials are characterized by a content of reactive silica and/or alumina which form strength providing calcium silicate hydrates and calcium aluminate hydrates, respectively, during hydration of the cement together with the calcium hydroxides liberated. In practice the limit between latent hydraulic and pozzolanic materials is not well defined, for example fly ashes can be both latent hydraulic and pozzolanic depending on their calcium oxide content. Consequently, the term SCM designates both latent hydraulic as well as pozzolanic materials. However, not reactive or only slightly reactive materials like limestone that substantially do not take part in the hydraulic reactivity have to be clearly differentiated from SCM, with which they are sometimes summarized as mineral additions.

As used herein, the term clay compounds refers to a solid material composed of clay minerals in crystalline, semi-crystalline or amorphous form and mixtures thereof. Generally, clay minerals are hydrous aluminium phyllosilicates that usually contain alkali metal, alkaline earth metal, iron and other cations, often in considerable amounts. They are commonly divided into 1:1 and 2:1 groups such as materials belonging to the kaolin group, or the smectite group, or the vermiculite group, or mixtures thereof. In addition to the crystalline clay minerals the designation clay compounds also covers analogous compounds in amorphous form.

According to the invention, separation of clays compounds from the quartz and/or feldspar by grinding and classification and subsequent calcination of the clay compounds provides a calcined clay optimal for use as SCM in composite cement. The quartz concentration during the calcination affects the amorphous content of the SCM. The amorphous reactive content can be increased by reducing the quartz content before the calcination. The specific thermal activation energy is reduced by separating the quartz and/or feldspar from the clay compounds.

The first step in the method is separation of the quartz and/or feldspar from clay compounds in a clay raw material is a pre-treatment before the calcination. The pre-treatment comprises grinding and classification according to the invention. Suitable clay raw materials contain kaolinite, dickite, halloysite, nacrite, montmorillonite, nontronite, beidelite, saponite, illite, palygorskite, and/or sepiolite in crystalline, semi-crystalline and/or amorphous form. Preferred are clay compounds are kaolinite, montmorillonite, illite and others in crystalline, semi-crystalline and/or amorphous form. Preferably, the clay raw material contains at least 15 wt.-% clay compounds, more preferred at least 20 wt.-% and most preferred at least 30 wt.-% with respect to the total clay raw material weight. The sum of clay compounds, quartz and feldspar should be at least 50 wt.-%, preferably at least 60 wt.-% and most preferred at least 70 wt.-% with respect to the total clay raw material weight. High amounts of kaolinite, e.g. at least 10 wt.-% and preferably at least 20 wt.-% with respect to the clay compounds, with the proviso that (Na₂O+K₂O+CaO+MgO)/Al₂O₃) is at least ≤ 0.30, preferably ≤ 0.20. It is an advantage of the method according to the invention that substantial amounts of quartz and/or feldspar can be present in the clay raw material without adverse effects during calcination.

The raw material is ground in a mill, if needed after crushing to a size that can be fed to the selected mill. The mill can be of any kind known per se, e.g. single- or multichamber ball mill, central discharge mill, vertical roller mill, impact mill, hammer mill, roller press, horomill, etc. Preferred devices are ball mills, roller press and vertical roller mills. The mill circuits are configured in a manner known per se to provide the predetermined/desired fineness and throughput. Specifically, the grinding time, the grinding power and other parameters are adjusted such that the easy to grind clay compounds are ground finer than the harder to grind quartz and/or feldspar. Ideally, substantially all or most of the clay compounds are ground to a predetermined particle size and substantially all or most of the quartz and/or feldspar remain in a coarser particle size. A roller mill, preferably a vertical roller mill or a roller press, is specifically useful as mill, because it provides an optimal separation of the materials.

The grinding results in the easier to grind clay compounds being finer than the harder to grind components quartz and/or feldspar. Thus, when the mill output is subjected to classification, the clay compounds are separated from the quartz and/or feldspar. The classification can be accomplished in any kind of separator, e.g. but not limited to static separators, dynamic separators of 1^{st}, 2^{nd}, 3^{rd} generation, VRM separators, etc. that are known per se. As known per se it is possible to include a disagglomerator, in particular when a roller press is used. The mill output is passed into the separator where the finer and/or lighter fraction comprising the recovered material in the separator is concentrated in clay compounds while the reject is enriched in quartz and/or feldspar. Typically, the recovered finer fraction is mainly - or even essentially only - clay compounds. The concentration of clay compounds in the fraction < 150 µm can range from 40 to 100 wt.-%, preferably is above 60 wt.-%, and most preferably higher than 80 wt.-%.On the other hand, the coarse product is enriched in quartz, typically contains above 50 wt.-%, preferably at least 60 wt.-%, and most preferred above 80 wt.-% quartz.

The reject product, usually mainly quartz, has several uses. In a preferred embodiment it is used in a dynamic process to cool down the calcined clay at the calciner outlet. In another embodiment it is used as a lever to optimize the performance of the calcined product with respect to cement performance and to concrete performance. The separated quartz can also directly be added to the cement formulation to adjust its performance. Alternatively its incorporation in the raw mix for clinker production can provide as well a valuable use since it can replace other silica sources. These emodiments are described in more detail below.

Thus, in one embodiment, the reject product, rich in quartz, is added to the raw meal preparation properly mixed in the raw mill feed to substitute natural SiO₂ sources like sands or low quality clays.

Another novel approach is to use the separated quartz to mix it with the calcined fine fraction (rich in clay compounds) before the cement mill to produce a composite cement. With the addition of this inert quartz fraction the reactivity and workability of the final product can be properly controlled. The addition can be done before the mill where its incorporation is controlled e.g. with a weight feeder, capable of providing accurate dosing. Suitable amounts with respect to the total composite cement weight range from 1 to 25 wt.-%, preferably from 2 to 15 wt.-%, and most preferred from 3 to 10 wt.-%.

Even more novel is a use of the inert material to directly or indirectly cool down the calcined material under reducing conditions as also described below to control the color of the calcined material. The indirect heat exchange can be done in any of the known technologies for solid to solid heat transfer. Alternatively, direct mixing can take place, also to provide a cooling effect under still reducing conditions. In order to do so sealing devices and technologies like double or most preferably triple pendulum valves are used, rotary sealed valves are also feasible. The amount of the cool inert material to be mixed with the hot calcined reactive fine fraction can vary from 5 to 75 wt.-% with respect to the total weight.

In one embodiment a second grinding is used to separate easier to grind components of the clay raw material in the fine fraction like mica from the clay compounds. The same devices and settings as described above for the first grinding and separation used to divide the raw material into clay compounds and quartz and/or feldspar are suitable.

The recovered finer fraction, if applicable after the second grinding step separating mica and other easier to grind components from it, is subsequently calcined under oxidizing or reducing conditions to provide the calcined clay. Preferably, this is done in a flash calciner, but other devices can also be used, e.g. a rotary kiln, a fluidized bed, microwaves, a chamber kiln. It is preferred to calcine the recovered fine fraction containing the clay compounds under reducing conditions in order to avoid dark colors of the calcined clay. Herein, calcination designates a thermal treatment that removes chemically bound water from clay compounds and provides a product having lower surface area than the raw material. Thus, calcination implies chemical and/or structural transformation by heat, but is not restricted to burning in air or oxygen, or to decarbonation of limestone. Useful temperatures typically range from 600 to 1000 °C, often from 700 to 900 °C. The necessary time can be from below one minute to several minutes and up to one hour, depending on the device used and the heating rate associated therewith. Examples for suitable methods and devices, including applicable conditions, can be found e.g. in Canut M., "Calcined Clay: Process Impact on the Reactivity and Color", Bishnoi S. (eds) "Calcined Clays for Sustainable Concrete", RILEM Bookseries, vol 25. Springer, Singapore; EP 3 615 489 A2; WO 2015/082075 A1; and WO 2010/000383 A1.

The calcined clay obtained by calcination is then cooled. The actual design of the cooling depends on the calcination device used. Thus, for example with a rotary kiln one typically uses a grate cooler. Preferably, the cooling down of the calcined clay from the calcination temperature down to 350°C takes place under reducing conditions, especially when the calcination was carried out under reducing conditions. Below 350 °C there is no advantage of reducing conditions. Examples for suitable methods and devices, including applicable conditions, can be found e.g. in R. S. Almenares, Industrial calcination of kaolinitic clays to make reactive pozzolans, Case Studies in Construction Materials 6 (2017) 225-232; R. San Nicolas, Characteristics and applications of flash metakaolins, Applied Clay Science 83-84 (2013) 253-262; and S. Salvador, Pozzolanic properties of flash-calcined kaolinite: a comparative study with soak-calcined products, Cement and Concrete Research, Vol. 25, No. 1. pp. 102-112.1995.

In one preferred embodiment, cooling down is achieved by mixing the calcined clay with a mineral addition desired in the composite cement. Preferably, the previously separated quartz and/or feldspar is used. This cooling can take place either by direct or indirect methods by any known system of heat exchange. This not only provides an innovative cooling step, without the use of external cooling media like air or water, but also a way of controlling the performance of the resultant cement, allowing the production of energy efficient cements. An alternative or additional incorporation of e.g. limestone in the cooling process provides flexibility both for reaching the limit temperature and/or controlling the reactivity/performance of the final cement. Typical mixing ratios of calcined clay to mineral addition are from 20:1 to 1:3 by weight, preferably from 10:1 to 1:2. The cooling can take place using any technology and the heat exchange can be done by any physical means that allows a proper thermal exchange.

If the obtained calcined clay has the necessary fineness, it can be used as is. Otherwise it can be ground in any device known as such.

Mixing of the calcined clay with the cement provides the composite cement. It can be accomplished in any known device, e.g. but not limited to in a mixing silo, drum, cooler, blender. The calcined clay can also be stored, e.g. in a silo, before mixing. In one embodiment mixing the cement and the calcined clay, optionally also other dry components like limestone and/or quartz, takes place by grinding clinker and calcined clay together. Co-grinding can extend to all components or to only some components.

Further, it is possible to add additional cement components during mixing cement and calcined clay, e.g. other SCM, admixtures, and/or additives. These can also be added later, and often are added when making the hydraulic building material.

The most common other SCM are fly ashes, ground granulated blast furnace slag, and natural pozzolans. Other SCM can also be used, like bottom ash and slags from other sources than iron making, shale, and burnt shale. Also other standard cement constituents as described in EN 197 can be added like silica fume and limestone. Often, silica fume is considered an additive, although it has pozzolanic properties. Also limestone is reactive in composite cements according to the invention due to the calcined clay.

Typical admixtures are water reducers, (super) plasticizers, (set) retarders, accelerators, air entraining agents, shrinkage reducing agents, and corrosion inhibitors. As far as they are dry materials they can be added to the cement. However, it is more usual to add them directly when mixing the cement and other components of the hydraulic building material with water. Admixtures are primarily used to reduce the cost of concrete construction; to modify the properties of hardened concrete; to ensure the quality of concrete during mixing, transporting, placing, and curing; and to overcome certain emergencies during concrete operations. They are also very important components of construction chemical mixes like screed and tile adhesive. According to the invention the known substances are used in the known amounts adapted to the specific use of the cement.

Additives are for example, but not limited to, fillers, pigments, and polymers. Fillers are mostly finely ground minerals like limestone and other rock flour which are usually not reactive. However, limestone can be quite reactive in composite cements according to the invention, conversion of up to 50 wt.-% has been found, of course depending on the amount and reactivity of the calcined clay. Pigments are used to provide coloured building materials wherein usually inorganic pigments are used. Polymers serve to render the hardened building material more flexible. Additives are known as such and used in the known amounts according to the invention. Since they are commonly dry substances they can be added to the cement, but also during mixing with water to provide a building material like concrete, mortar, screed etc.

It is further possible to provide a building material in the form of a dry mix that merely needs addition of the proper amount of water for use. Such dry mixes contain the composite cement, any needed admixture and additive as well as the aggregate. However, usually aggregate and water are mixed directly one after the other with the composite cement and if applicable additives, admixtures are typically added to the mixing water.

The composite cement according to the invention comprises at least a cement and the calcined clay obtainable by grinding a material comprising clay compounds and at least one of quartz and feldspar, separating the clay compounds from quartz and/or feldspar by classification and thermal treatment of the clay compounds to provide the calcined clay. The composite cement can comprise admixtures and/or additives as explained before.

Suitable amounts of SCM including calcined clay are 5 to 80 wt.-%, preferably 10 to 70 wt.-%, most preferred 20 to 55 wt.-%, with respect to the total amount of composite cement. In one preferred embodiment, the composite cement comprises 10 to 95 wt.-% cement and 80 to 5 wt.-% calcined clay, preferably 30 to 80 wt.-% cement and 70 to 10 wt.-% calcined clay, most preferred 45 to 80 wt.-% cement and 55 to 20 wt.-% calcined clay. The amounts of all components in a cement add up to 100 wt.-%, of course, so if additional components besides cement and calcined clay are added the amounts of cement and clay are smaller.

The cement in the composite cement is preferably Portland cement (OPC), but can also be for example but not limited to a belite cement (e.g. obtained by hydrothermal treatment of a suitable starting material followed by tempering and/or grinding), a calcium sulfoaluminate cement, or a calcium aluminate cement. Portland cement and belite cements can also comprise one or more additional SCM.

Useful compositions of the composite cement are those found in standards like EN 197-1, but compositions outside the standardized types are also possible and can be advantageous. One example are hybrid cements.

The composite cement is useful for all applications where OPC is used, especially for use as building material like concrete, mortar, screed, tile adhesive, grout etc. It shows a normal setting and hardening and conforms to the usual strength requirements.

Thus, the method according to the invention as well as the use of the specific calcined clay provide versatile and useful composite cements able to replace classic OPC and composite cements without loss in functionality and quality. Hitherto less useful or unusable materials comprising clay compounds can be made useful with minimal energy use. This is particularly advantageous in view of the increasing demand for hydraulic building materials and decreasing resources of suitable natural minerals and their replacement for clinker raw material and of SCM with sufficient quality for composite cements.

The invention will be illustrated further with reference to the attached figures, without restricting the scope to the specific embodiments described. The invention includes all combinations of described and especially of preferred features that do not exclude each other.

If not otherwise specified any amount in % or parts is by weight and in the case of doubt referring to the total weight of the composition/mixture concerned. A characterization as "approximately", "around" and similar expression in relation to a numerical value means that up to 10 % higher and lower values are included, preferably up to 5 % higher and lower values, and in any case at least up to 1 % higher and lower values, the exact value being the most preferred value or limit.

The term "substantially free" means that a particular material is not purposefully added to a composition, and is only present in trace amounts or as an impurity. As used herein, unless indicated otherwise, the term "free from" means that a composition does not comprise a particular material, i.e. the composition comprises 0 weight percent of such material.

In the figures:
Figure 1 shows a scheme of a first variant of the method according to the invention,
Figure 2 shows a scheme of a second variant of the method according to the invention, and
Figure 3 shows a scheme of a third variant of the method according to the invention.

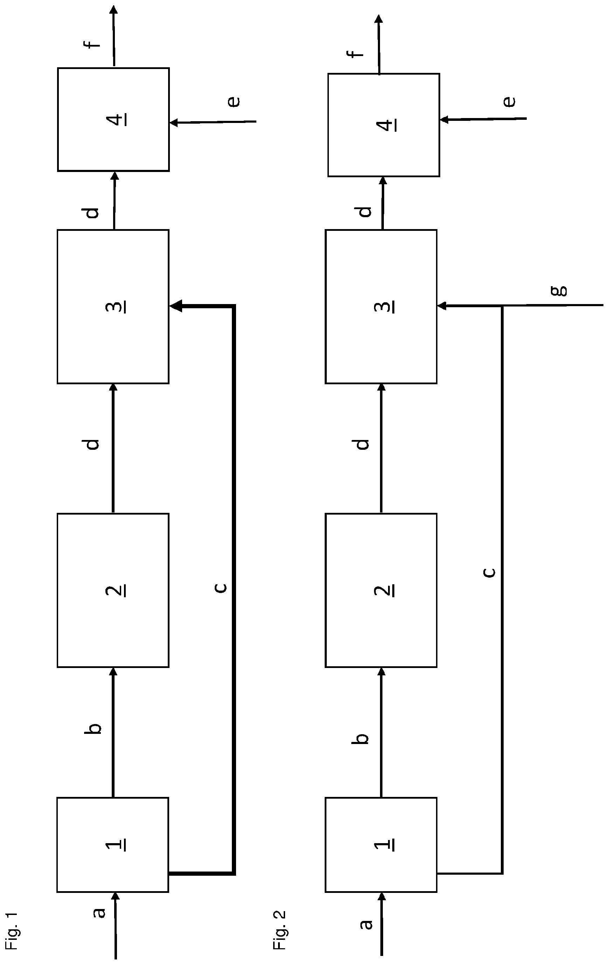

In figure 1 the first step of the method according to the invention is grinding the clay raw material a comprising clay compounds and quartz in a vertical roller mill 1 including a classifier. The mill output is a fine fraction b comprising most of the clay compounds, e.g. at least 90 wt.-%, and some easy to grind components like mica. The fine fraction b is transferred into a flash calciner 2 and calcined at about 600 to 950 °C for approximately 30 seconds to 5 minutes. The hot calcined clay d is passed into a cooler 3, where cooling is accomplished by mixing with the cold coarse fraction c coming from the mill 1, for example in a weight ratio d:c from 5:1 to 1:1. This fraction contains mainly quartz and some feldspar but not more than 10 wt.-% clay compounds. The calcined clay d is finally transferred into a mixing device 4, where it is mixed with cement e to provide the composite cement f. The mill for grinding cement clinker can be used as mixing device.

Figure 2 illustrates another embodiment of the method according to the invention, wherein analogous parts and materials are designated in the same way as in figure 1. The difference between figure 2 and figure 1 is that the clay raw material a has less quartz and feldspar. Thus, for cooling the calcined clay d a sufficient amount of limestone filler g is used together with the coarse fraction c and introduced into the cooler 3. Mixing with cement e to provide the composite cement f occurs like in figure 1.

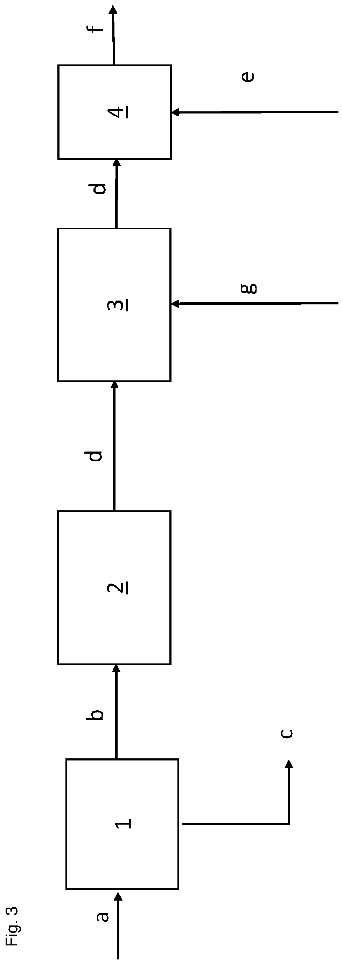

In figure 3 same parts are again desingted in the same way as in figures 1 and 2. Here the coarse fraction is not used as filler to cool the calcined clay d, but utilized as cement raw material. Therefore, only limestone filler g is mixed with calcined clay d in cooler 3 to cool the calcined clay. Further processing is the same as in figures 1 and 2.

### List of reference numbers:

- 1: mill with classifier
- 2: calciner
- 3: cooler
- 4: mixing device (mill when e is cement clinker)

- a: clay raw material
- b: fine fraction
- c: coarse fraction
- d: calcined clay
- e: cement (or cement clinker)
- f: composite cement
- g: filler

## Claims

1. Method for manufacturing a composite cement comprising a cement and calcined clay comprising the steps:
- providing the cement,
- providing calcined clay by grinding a clay raw material comprising clay compounds and at least one of quartz and feldspar, classification to provide a fine fraction comprising most of the clay compounds and a coarse fraction comprising most of the quartz and/or feldspar and calcination of the fine fraction containing most of the clay compounds and cooling to provide the calcined clay,
- mixing the cement with the calcined clay to provide the cement.

2. Method according to claim 1, wherein the sum of clay compounds, quartz and feldspar in the clay raw material is at least 30 wt.-%, preferably at least 40 wt.-% and most preferred at least 50 wt.-%, with respect to the total clay raw material weight.

3. Method according to claim 1 or 2, wherein grinding takes place in a ball mill, central discharge mill, vertival roller mill, impact mill, hammer mill, roller press or horomill and/or grinding time and grinding power are adjusted so that at least 50 wt.-% of the clay compounds are finer than a particle size setting and at least 50 wt.-% of the quartz and feldspar are coarser than the particle size setting.

4. Method according to one of claims 1 to 3, wherein the fine fraction contains 60 wt.-% of the clay compounds, preferably 75 wt.-% of the clay compounds and most preferred 90 wt.-% of the clay compounds from the clay raw material.

5. Method according to one of claims 1 to 4, wherein a flash calciner, a rotary kiln, a fluidized bed, microwaves, or a chamber kiln is used for calcination, preferably a flash calciner.

6. Method according to one of claims 1 to 5, wherein calcination takes place under reducing conditions, preferably wherein calcination and cooling from calcination temperature to 350 °C takes place under reducing conditions.

7. Method according to one of claims 1 to 6, wherein the calcined clay is cooled by mixing the calcined clay with a mineral addition used in the composite cement, preferably with the previously separated quartz and/or feldspar, preferably in a weight ratio calcined clay:mineral addition from 20:1 to 1:3.

8. Composite cement obtainable by the method according to one of claims 1 to 7.

9. Composite cement according to claim 7, wherein the cement is selected from the group comprising Portland cement, belite cement obtained by hydrothermal treatment of a suitable starting material followed by tempering and/or grinding, calcium sulfoaluminate cement, and calcium aluminate cement, preferably Portland cement is used.

10. Composite cement according to claim 7 or 8, wherein the composite cement comprises 10 - 95 wt.-% cement and 5 - 80 wt.-% calcined clay, preferably 30 - 80 wt.-% cement and 10 - 70 wt.-% calcined clay, most preferred 45 - 80 wt.-% cement and 20 - 55 wt.-% calcined clay, with the proviso that the amounts of cement and calcined clay add up to 100 wt.-% together with any optional components present.

11. Composite cement according to one of claims 7 to 10, wherein additionally supplementary cementitous materials other than calcined clay, admixtures and/or additives are contained.

12. Composite cement according to claim 11, wherein the admixtures are selected from water reducers, (super) plasticizers, (set) retarders, accelerators, air entraining agents, shrinkage reducing agents, and corrosion inhibitors and/or the additives are selected from fillers, pigments, and polymers.

13. Composite cement according to claim 12, wherein the composite cement contains limestone, preferably in a weight ratio calcined clay:limestone from 20:1 to 1:3.

14. Use of a calcined clay, obtainable by grinding a clay raw material comprising clay compounds and at least one of quartz and feldspar, classification of the ground clay raw material providing a fine fraction containing most of the clay compounds and a coarse fraction comprising most of the quartz and/or feldspar, calcination of the fine fraction containing most of the clay compounds and cooling to provide the calcined clay, to manufacture a composite cement by mixing the calcined clay with a cement.

15. Use according to claim 14, wherein the composite cement comprises 10 - 95 wt.-% cement and 5 - 80 wt.-% calcined clay, preferably 30 - 80 wt.-% cement and 10 - 70 wt.-% calcined clay, most preferred 45 - 80 wt.-% cement and 20 - 55 wt.-% calcined clay, with the proviso that the amounts of cement and calcined clay add up to 100 wt.-% together with any optional components present.
